# EUROPÄISCHE PATENTSCHRIFT

(11) **EP 2 035 667 B1**
(45) Veröffentlichungstag und Bekanntmachung des Hinweises auf die Patenterteilung: **10.09.2014**
(21) Anmeldenummer: 07728386.9
(22) Anmeldetag: 23.04.2007
(51) Int. Cl.: F02B 37/18, F02D 35/00, F15B 9/12, F02D 41/00, F15B 15/10, F16K 31/06, F02D 41/20

(54) **PNEUMATISCHER STELLANTRIEB MIT INTEGRIERTER ELEKTROPNEUMATISCHER POSITIONSREGELUNG**
PNEUMATIC ACTUATING DRIVE COMPRISING AN INTEGRATED ELECTROPNEUMATIC POSITION ADJUSTMENT
SERVOMOTEUR PNEUMATIQUE À RÉGULATION DE POSITION ÉLECTROPNEUMATIQUE INTÉGRÉE

(30) Priorität: 19.06.2006 DE 102006028015
(43) Veröffentlichungstag der Anmeldung: 18.03.2009
(73) Patentinhaber: Robert Bosch GmbH, 70442 Stuttgart (DE)
(72) Erfinder: BAEUERLE, Michael, 71254 Ditzingen-Heimerdingen (DE); SCHNEIDER, Helmut, 72631 Aichtal (DE); HOEFFKEN, Dirk, 71334 Waiblingen (DE)
(86) Internationale Anmeldenummer: PCT/EP2007/053929
(87) Internationale Veröffentlichungsnummer: WO 2007/147661

(56) Entgegenhaltungen:
- FR-A1- 2 176 670
- GB-A- 2 078 856
- US-A- 4 597 264
- US-A- 4 864 915
- US-A- 5 755 101
- US-A1- 2002 195 151

## Beschreibung

### Stand der Technik

Für Anwendungen im Automobilbereich werden heute im Rahmen der Kraftfahrzeugaktuatorik pneumatische Aktoren eingesetzt. Die pneumatischen Aktoren sind vorwiegend in der Form von Druckdosen ausgebildet, die sowohl mittels eines Überdruckes oder mittels eines Unterdruckes betätigbar sind. Die Druckdosen werden im Allgemeinen nicht elektronisch kontrolliert und sind so ausgebildet, dass der in den Druckdosen herrschende Druck, so z. B. ein Ladedruck, direkt auf eine Feder oder eine Membran wirkt. An Aufladeeinrichtungen für Verbrennungskraftmaschinen, insbesondere an Abgasturboladern, eingesetzte Druckdosen wird die Stellposition des Stellgliedes der Druckdose auf elektronischem Wege dadurch kontrolliert, indem ein Taktventil mittels eines PWM-Signales von einem Ladedruckregler angesteuert wird. Das angesteuerte Taktventil stellt den zu einem Ladedruck-Sollwert- beziehungsweise Ladedruck-Istwert-Abgleich erforderlichen Druck der Druckdose oder die erforderliche Position des Stellgliedes der Druckdose ein. Das Taktventil kann sowohl extern, so z. B. in der Zuleitung zur Druckdose, vorgesehen sein oder auch in die Druckdose integriert sein. Hinsichtlich einer Zustandsregelung hinsichtlich der Position des Stellgliedes einer Druckdose sind dabei sehr aufwändige elektronische Regelungen erforderlich. Insbesondere bei selbstzündenden Verbrennungskraftmaschinen, denen z. B. eine Aufladeeinrichtung zugeordnet ist, die als mit einer verstellbaren Turbinengeometrie ausgelegter Abgasturbolader beschaffen sein kann, ist jedoch infolge der Kopplung zwischen einer Abgasrückführung und der Ladedruckregelung eine Regelung der Position des Stellgliedes der Druckdose zunehmend zwingend erforderlich. Um dies umzusetzen, kommen dazu nur relativ kostspielige elektrische Steller mit Positionsrückmeldung und elektronischer Lageregelung in Frage, die einerseits der Aufladeeinrichtung mit verstellbarer Turbinengeometrie direkt zugeordnet sein können oder in das Motorsteuergerät einer Verbrennungskraftmaschine integriert sind.

Aus EP 0 976 919 A2 ist eine Aufladeeinrichtung bekannt, die als Abgasturbolader ausgeführt ist und ein Wastegate umfasst. Zur Ladedruckregelung am Abgasturbolader wird eine Stellstange eingesetzt, die einen ersten Stangenabschnitt und einen zweiten Stangenabschnitt aufweist. Die beiden Stangenabschnitte der Stellstange sind verdrehbar miteinander gekoppelt und lassen sich gegeneinander verdrehen. Mittels der Stellstange wird ein Hebearm betätigt, der seinerseits mit dem Wastegate des Abgasturboladers gekoppelt ist.

Aus der US 4,864,915 ist ein elektropneumatischer Steller zur Betätigung von Aggregaten einer Verbrennungskraftmaschine bekannt, der ein Gehäuse umfasst, in dem ein mit einer Membran verbundenes Stellglied beweglich aufgenommen ist, wobei die Membran in dem Gehäuse eine Druckkammer vom übrigen Innenraum des Gehäuses trennt und in der Druckkammer ein geringerer Druck als Atmosphärendruck einstellbar ist und wobei der Stellglied hohl ausgeführt ist und mit einem hülsenförmigen Steuerschieber zusammenarbeitet.

Aus der US 5,755,101 ist ein elektropneumatischer Steller zur Betätigung von Aggregaten einer Verbrennungskraftmaschine bekannt, der ein Gehäuse umfasst, in dem ein mit einer Membran verbundenes Stellglied beweglich aufgenommen ist, wobei die Membran in dem Gehäuse eine Druckkammer vom übrigen Innenraum des Gehäuses trennt und in der Druckkammer ein geringerer Druck als Atmosphärendruck einstellbar ist.

Aus der US 2002/195151 A1 ist ein elektromagnetisch betriebenes Drucksteuerventil zur Einstellung eines hydraulischen Drucks in Getriebekupplungen bekannt, das ein PWM-Signal zur Ansteuerung der Spule des Elektromagneten verwendet.

Aus der GB 2 078 856 A1 ist eine Ansteuerung für eine Verbrennungskraftmaschine mit mit Turbolader bekannt, wobei ein Turbolader mit einem Turbinen-Bypass-Ventil in Abhängigkeit vom Differenzdruck zwischen dem Turboladedruck, der einer ersten Druckkammer zugeführt wird, und dem Atmosphärendruck, der einer zweiten Druckkammer zugeführt wird, gesteuert wird. Eine Druckabtasteinrichtung misst den Turboladedruck, und Drucksteuerungsventile leiten den Atmosphärendruck in die erste Druckkammer der Druckeinrichtung und den Druck, der zwischen der Drosselklappe der Verbrennungskraftmaschine und dem Kompressor des Turboladers herrscht, in die zweite Druckkammer, wenn der Turboladedruck geringer als ein vorgegebener Wert ist.

Aus der FR 2 176 670 A1 ist eine elektrohydraulische Stelleinrichtung zur Fernsteuerung von Wegeventilen bekannt, die ein in einem Gehäuse beweglich angeordnetes

Stellglied aufweist, dass einen an beiden Enden mit einem hydraulischen Druckmittel beaufschlagbaren Differenzialkolben aufweist. Der hydraulische Druck am Kolben wird über ein Vorsteuerventil mit Vorsteuerschieber eingestellt. Der Vorsteuerschieber wird wiederum mittels eines Elektromagneten betätigt, wobei der Vorsteuerschieber in den Kolben des Stellgliedes integriert ist und sich über eine Rückholfeder an einem Gehäuse der Stelleinrichtung abstützt.

### Offenbarung der Erfindung

Der Erfindung liegt die Aufgabe zugrunde, einen pneumatischen Steller bereitzustellen, der als Funktion eines eingehenden, die Sollposition repräsentierenden Signals die Position eines Aktuators im Rahmen eines Soll/Ist-Abgleiches pneumatisch regelt.

Erfindungsgemäß wird ein selbstregelnder pneumatischer Steller vorgeschlagen, der ein kolbenstangenförmiges Stellglied aufweist, welches mit einer Membran zusammenwirkt, wobei die Position des Stellgliedes präzise auf elektropneumatischem Wege abgeglichen werden kann. Durch diese Lösung lässt sich eine teure und temperaturempfindliche Elektronik oder Sensorik vermeiden. Des Weiteren zeichnet sich die erfindungsgemäß vorgeschlagene Lösung durch einen reduzierten Luftverbrauch aus. An dem kolbenstangenförmig ausgebildeten Stellglied erforderliche Querschnitte zur Be-und Entlüftung können gleichzeitig geschlossen werden, so dass der aktuell eingestellte Dosendruck und die Position des kolbenstangenförmig ausgebildeten Stellgliedes gehalten werden können. Mit Dosendruck ist nachfolgend der Druck gemeint, der im Unterdruckbereich des pneumatischen Stellers herrscht.

Das Regelverhalten des vorgeschlagenen pneumatischen Stellers lässt sich durch ange-passte Öffnungsgeometrien der Querschnitte zur Be- und Entlüftung optimieren. So lässt sich z. B. die Geometrie des Querschnittes über den Hubweg von Be- beziehungsweise Entlüftungsventilen progressiv ausführen, so dass im Bereich kleiner Soll/Ist-Abweichungen schwach korrigiert wird und im Bereich größerer Soll/Ist-Abweichungen eine starke Korrektur erreicht wird. Dadurch können bei großen Abweichungen schnelle Stellbewegungen erfolgen, ohne die Gefahr zu laufen, dass sich im Bereich kleinerer Abweichungen Instabilitäten, wie z. B. ein Schwingen des pneumatischen Stellers um die Soll-Lage, ergeben.

Erfindungsgemäss ist der Steuerschieber als eine flachbauende, ein stangenförmig ausgebildetes Stellglied umschließende Hülse ausgeführt. Der hülsenförmig beschaffene Steuerschieber überdeckt zwei benachbart im Mantel des stangenförmig ausgebildeten Steuerschiebers angeordnete Öffnungen, von denen eine der Belüftung und die andere der Entlüftung dient. Der hülsenförmig ausgebildete Steuerschieber umfasst einen Freistich, so dass ein Kurzschluss der beiden nebeneinander liegenden, im Mantel des stangenförmigen Stellgliedes ausgebildeten, als Kanäle dienenden Öffnungen möglich ist. Der hülsenförmig ausgebildete Steuerschieber ist in radiale Richtung gesehen von der Magnetspule umschlossen und wird durch eine sich am Gehäuse oder einer Lagerbuchse abstützenden Druckfeder vorgespannt. Bei einer Axialbewegung entsprechend der auf das stangenförmige Stellglied wirkenden Last wird eine der beiden Öffnungen im Mantel des stangenförmig ausgebildeten Stellgliedes freigegeben, so dass je nach Bewegungsrichtung, d. h. bei zunehmender oder abnehmender auf das stangenförmig ausgebildete Stellglied wirkender Last, eine Belüftung oder eine Entlüftung einer Unterdruckkammer des pneumatischen Stellers erfolgt.

Über einen spulenförmig ausgebildeten Elektromagneten wird als Funktion eines anliegenden Tastverhältnisses des PWM-Signales eine entgegen der Kraft einer Regelfeder wirkende Magnetkraft auf den Steuerschieber übertragen, so dass sich infolge der Trägheit des Steuerschiebers eine definierte Effektivposition, d. h. ein Kräftegleichgewicht, am Steuerschieber einstellt. Die dem Kräftegleichgewicht entsprechende Effektivposition definiert den Sollwert.

### Zeichnung

Anhand der Zeichnung wird die Erfindung nachstehend eingehender beschrieben. Es zeigt:
- Figur 1: das Funktionsprinzip eines beispielshaften elektropneumatischen Stellers anhand federbelasteter dichtschließender Ventile,
- Figur 2: die Ausführung des erfindungsgemäß vorgeschlagenen elektropneumatischen Stellers und
- Figur 3: eine Einsatzmöglichkeit des erfindungsgemäßen elektropneumatischen Stellers an einer Verbrennungskraftmaschine zur Betätigung eines Wastegates einer Aufladeeinrichtung.

### Ausführungsvarianten

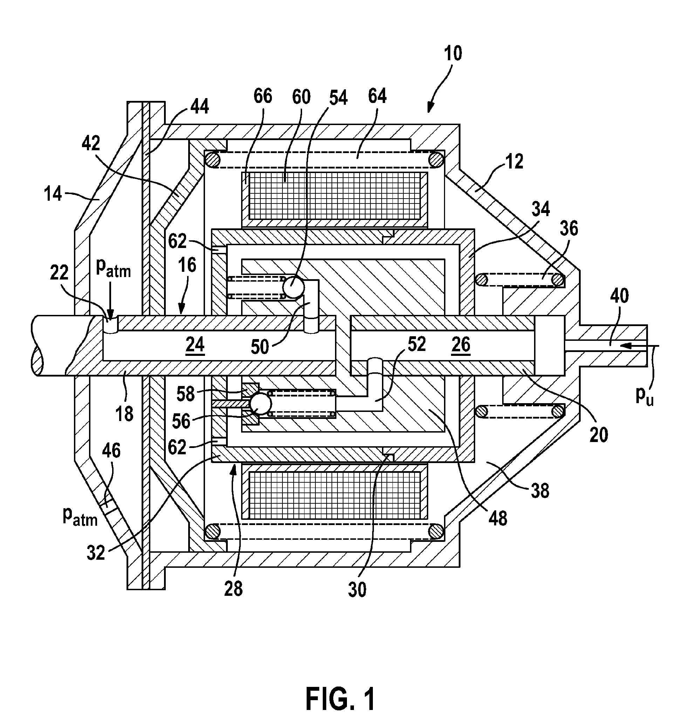

Der Darstellung gemäß Figur 1 ist ein Beispiel eines elektropneumatischen Stellers auf Basis federbelasteter dichtschließender Ventile zu entnehmen.

Ein elektropneumatischer Steller 10 umfasst ein Gehäuse 12, das über einen Gehäusedeckel 14 mit einer Bohrung 46 verschlossen ist. Das Gehäuse 12 ist von einer als Stellglied 16 vorgesehenen Membranstange durchsetzt, die einen ersten Membranstangenteil 18 sowie einen zweiten Membranstangenteil 20 umfasst. Am ersten Membranstangenteil 18 ist eine Öffnung 22 zum Druckausgleich mit der Atmosphäre vorgesehen. Das erste Membranstangenteil 18 ist von einem Belüftungskanal 24 durchsetzt, das zweite Membranstangenteil 20 ist ebenfalls hohl ausgeführt und umschließt einen Entlüftungskanal 26.

Eine Führung der in der Darstellung gemäß Figur 1 zweiteilig ausgebildeten Membranstange 16 wird einerseits durch einen Membranteller 42 erreicht, der innerhalb eines Hohlraumes 38 im Gehäuse 12 verschiebbar angeordnet ist und mittels einer Spannfeder 64 beaufschlagt ist. Der Membranteller 42 überträgt die Kraft von der Feder 64 auf eine mit dem ersten Membranstangenteil 18 verbundene Membran 44, an die der Membranteller 42 angestellt ist. Die Führung der zweiteilig ausgebildeten Membranstange innerhalb des Gehäuses 12 wird andererseits durch einen im Gehäuse 12 ausgebildeten Stutzen gewährleistet. Der innere Teil des im Gehäuse 12 ausgebildeten Stutzens ist durch eine in der Darstellung gemäß Figur 1 nicht dargestellte Dichtung, zum Beispiel einen O-Ring, zur bewegbar angeordneten, zweiteilig ausgeführten Membranstange hin abgedichtet.

Am Umfang der zweiteilig ausgebildeten Membranstange gemäß dem in Figur 1 dargestellten Ausführungsbeispiel befindet sich ein Regelschieber 28. Der Regelschieber 28 umfasst ein erstes Regelschieberteil 32 und ein zweites Regelschieberteil 34, die an einer Fügestelle 30 miteinander verbunden sind. Der relativ zur zweiteilig ausgeführten Membranstange verschiebbare Regelschieber 28 wird durch eine Feder 36 beaufschlagt, die sich oberhalb des Stutzens im Gehäuse 12 an diesem abstützt. Der Regelschieber 28 umschließt einen Steuerschieber 48, in dem seinerseits ein erstes Ventil 54 zur Belüftung und ein zweites Ventil 56 zur Entlüftung ausgebildet sind. Das erste und das zweite Ventil sind federbelastet ausgeführt und schließen in einer abgeglichenen Soll/Ist-Position z. B. über kugelförmig ausgebildete Schließkörper dichtend ab. Am zweiten Regelschieberteil 34 stützt sich eine das kugelförmig ausgebildete Schließelement des ersten Ventils 54 beaufschlagende Druckfeder ab. Der kugelförmig ausgebildete Schließkörper des zweiten Ventils 56, welches der Entlüftung des Entlüftungskanals 26 dient, umfasst einen Einsatz 58, welcher durch das kugelförmig ausgebildete Schließelement beaufschlagt ist. Ein an dem Regelschieber festgelegter Vorsprung öffnet und schließt das federbeaufschlagte zweite Ventil 56.

Sobald sich beim in Figur 1 dargestellten Ausführungsbeispiel durch Einwirkung äußerer Störgrößen eine Änderung der Position der zweiteilig ausgeführten Membranstange 16 ergibt, wird bei unverändert beibehaltener Position des in axiale Richtung verschiebbar angeordneten Regelschiebers 28 eines der beiden Ventile 54 beziehungsweise 56 so lange geöffnet und damit der Dosendruck vorzeichenrichtig korrigiert, bis beide Ventile 54 beziehungsweise 56 nach Erreichen einer erneuten abgeglichenen Soll/Ist-Position schließen.

Mittels einer den Regelschieber 28 umschließenden Magnetspule 60 wird als Funktion eines an dieser anliegenden Tastverhältnisses eines PWM-Signales (in der Regel einige Hundert Hertz) eine entgegen der Kraft der Feder 36 wirkende Magnetkraft auf den Regelschieber 28 ausgeübt, so dass sich infolge der Trägheit des Regelschiebers 28 ein Kräftegleichgewicht am Regelschieber 28 zwischen der den Regelschieber 28 beaufschlagenden Magnetkraft einerseits und der Kraft der Feder 36 und den auf die Ventile 54 beziehungsweise 56 wirkenden Federkräften andererseits einstellt. Der Vollständigkeit halber sei erwähnt, dass die Magnetspule 60 von einer Umhüllung 66 umschlossen ist.

Die dem Kräftegleichgewicht des Regelschiebers 28 entsprechende Effektivposition des Regelschiebers definiert einen Positionssollwert eines rein pneumatisch wirkenden Positionsreglers und führt zu einer Ausgleichsbewegung zwischen dem Regelschieber 28 und dem Steuerschieber 48, so dass die Position der im Ausführungsbeispiel gemäß Figur 1 zweiteilig ausgebildeten Membranstange definiert wird. Während das der Belüftung des Belüftungskanals 24 dienende erste Ventil 54 über einen im Steuerschieber 48 ausgebildeten Kanal 50 mit dem Belüftungskanal 24 in Verbindung steht, ist das zweite Ventil 56, welches der Entlüftung des Entlüftungskanals 26 dient, über einen ebenfalls im Steuerschieber 48 ausgebildeten Kanal 52 mit dem Entlüftungskanal 26 verbunden. Der Entlüftungskanal 26 steht darüber hinaus über eine Öffnung 40 im Gehäuse 12 mit einem Druckniveau in Verbindung - in Figur 1 durch pᵤ bezeichnet. Mit pᵤ ist ein Unterdruck bezeichnet, der an der Öffnung 40 des elektropneumatischen Stellers 10 ansteht und welcher den Quelldruck einer Unterdruckpumpe darstellt. Der Druck pᵤ liegt in der Größenordnung von < 0,25 bar.

Mit Bezugszeichen 62 sind Überströmöffnungen im ersten Regelschieberteil 32 bezeichnet, welche einen Druckausgleich zwischen dem Hohlraum 38 und dem Hohlraum ermöglichen, der durch den Raum zwischen dem Steuerschieber 48 und dem Inneren des Regelschiebers 28 gebildet wird. Der Hohlraum 38 und der Hohlraum, der durch den Raum zwischen dem Steuerschieber 48 und dem Inneren des Regelschiebers 28 gebildet wird, bilden eine Druckkammer des Gehäuses 12, in der ein Druck zwischen dem Unterdruck pᵤ und dem Atmosphärendruck pₐₜₘ einstellbar ist. Der Raum zwischen der Membran 44 und dem Gehäusedeckel 14 bildet eine Kammer, die über ein Bohrung 46 mit Atmosphärendruck pₐₜₘ beaufschlagt ist.

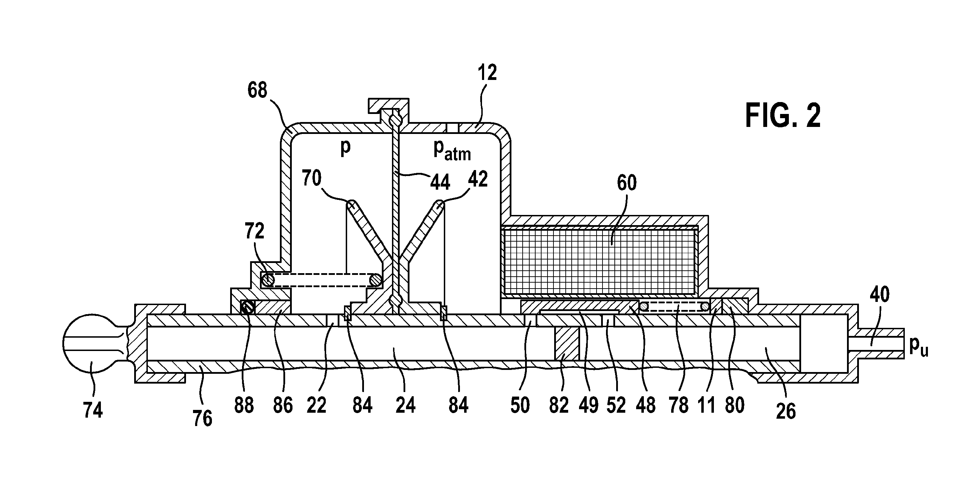

Der Darstellung gemäß Figur 2 ist die Ausführung des erfindungsgemäß vorgeschlagenen pneumatischen Stellers mit reduziertem Luftverbrauch zu entnehmen.

Der in Figur 2 im Halbschnitt bezüglich seiner Symmetrieachse dargestellte elektropneumatische Steller 10 umfasst das Gehäuse 12, innerhalb dessen die Membran 44 an einer Teilungsfuge eingespannt ist. Am Gehäuse 12 ist eine Druckkammer 68 ausgeführt, in der ein von pₐₜₘ verschiedener Druck herrscht. Die Druckkammer 68 ist über die Membran 44 vom übrigen Innenraum des Gehäuses 12 getrennt. Die nachfolgenden Ausführungen betreffen eine Druckkammer 68, in der ein Unterdruck herrscht. Die Druckkammer 68 kann jedoch auch mit einem über pₐₜₘ herrschenden Druck beaufschlagt sein. Der Druck in der Druckkammer 68 ist durch p bezeichnet. Die Membran 44 wird einerseits durch einen Federteller 70 beaufschlagt, der wiederum durch eine Membranfeder 72 vorgespannt ist. Die Membranfeder 72 stützt sich an einer Ausnehmung einer Gehäusehälfte des Gehäuses 12 ab. Andererseits ist die im Gehäuse 12 eingespannte Membran 44 durch den Membranteller 42 beaufschlagt. Der Membranteller 42 ist mittels zweier Seegerringe 84 auf dem in der Ausführungsvariante gemäß Figur 2 einteilig ausgebildeten, als Stellglied anzusehenden Steuerkolben 76 aufgenommen, welcher im Wesentlichen der im Ausführungsbeispiel gemäß Figur 1 zweiteilig ausgebildeten Membranstange 16 entspricht.

Durch die beiden Seegerringe 84 sind die Axialpositionen des Federtellers 70 sowie des Membrantellers 42 in Bezug auf den einteilig ausgebildeten Steuerkolben 76 definiert. Eine Feder 78 stützt sich am hülsenförmig ausgebildeten Steuerschieber 48 ab, der in der Darstellung gemäß Figur 2 in der dort eingezeichneten Axiallage zwei Öffnungen 50, 52 im Mantel des einteilig ausgebildeten Steuerkolbens 48 verschließt. Der Steuerschieber 48 ist in axiale Richtung relativ zum einteilig ausgebildeten Steuerkolben 76 bewegbar, hülsenförmig ausgeführt und umfasst einen der Mantelfläche des Steuerkolbens 76 zuweisenden Freistich 49.

In der Darstellung gemäß Figur 2 ist der Steuerschieber 48 im Gegensatz zum in Figur 1 dargestellten Ausführungsbeispiel vereinfacht als Hülse ausgeführt. Des Weiteren sind die im Ausführungsbeispiel gemäß Figur 1 dargestellten Kanäle 50, 52 in der in Figur 2 dargestellten Ausführungsvariante als Öffnungen 50, 52 im Mantel des Steuerkolbens 76 ausgeführt. Oberhalb des hülsenförmig ausgebildeten Steuerschiebers 48 ist die Spule 60 dargestellt, die in das Gehäuse 12 eingebettet ist.

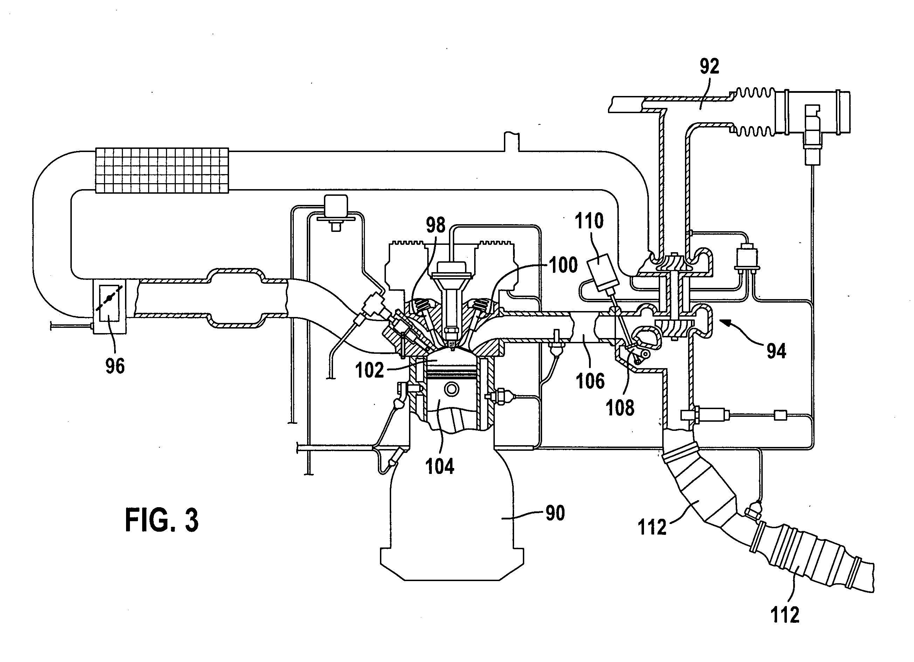

Der einteilig ausgebildete Steuerkolben 76 ist in Lagerbuchsen 86,11, die ihrerseits ins Gehäuse 12 eingelassen sind, verschieblich geführt. Zwischen der Lagerbuche 11 und dem Gehäuse 12 kann eine Dichtung 80 angeordnet sein. Der analog zum Ausführungsbeispiel in Figur 1 hohl ausgebildete Steuerkolben 76 umfasst einen Kugelkopf 74, mit welchem z. B. ein Wastegate 108 einer Aufladeeinrichtung 94 einer Verbrennungskraftmaschine 90 betätigbar ist (vergleiche Figur 3).

In der Position, in welcher der hülsenförmig ausgebildete Steuerschieber 48 in der Ausführung gemäß Figur 2 dargestellt ist, überdeckt der Freistich 49 den zweiten Kanal 52, erstreckt sich jedoch noch nicht über die erste Öffnung 50 in der Wand des einteiligen Steuerkolbens 76. Zwischen den Kanälen 50, 52 in der Wand des Steuerkolbens 76 befindet sich ein Stopfen 82, welcher den Hohlraum des Steuerkolbens 76 in den Belüftungskanal 24 und den Entlüftungskanal 26 unterteilt. Die Druckkammer 68 steht über die Öffnung 22 mit dem Belüftungskanal 24 in Verbindung. An der Öffnung 40 des Gehäuses 12 steht der vom Atmosphärendruck pₐₜₘ abweichende Druck pᵤ an, der durch eine Unterdruckquelle erzeugt wird. In demjenigen Teil des Innenraum des Gehäuse 12 des elektropneumatischen Stellers 10, der nicht zur Druckkammer 68 gehört, herrscht Atmosphärendruck pₐₜₘ. In einer Position, in der der Steuerschieber 48 in Fig. 2 ganz nach rechts bewegt ist, ist der Belüftungskanal 24 über den Kanal 50 mit dem Atmosphärendruck im Gehäuse 12 verbunden.

In der Darstellung gemäß Figur 2 befindet sich der hülsenförmig ausgebildete Steuerschieber 48 in einer den zweiten Kanal 52 überdeckenden Position. In dieser auch als neutrale Lage bezeichneten abgeglichenen Position sind beide Kanäle 50, 52 voneinander getrennt, so dass der Druck nicht verändert wird und damit die Position des einteilig ausgebildeten Steuerkolbens 76 beibehalten wird. Der Freistich 49 überdeckt nur den ersten Kanal 50, nicht jedoch den zweiten Kanal 52.

Bei Einwirkung äußerer Störkräfte, z. B. bei einer auf den Kugelkopf 74 wirkenden steigenden Last, wird der einteilig ausgebildete Steuerkolben 76 nach rechts verschoben. Aufgrund der Verschiebungsbewegung des einteilig ausgebildeten Steuerkolbens 76 nach rechts werden die die Kanäle darstellenden Öffnungen 50, 52 vom Freistich 49 an der Innenseite des hülsenförmig ausgebildeten Steuerschiebers 28 verbunden, so dass eine Entlüftung (Druckabsenkung) in der Druckkammer 68 erfolgt und eine Ausgleichsbewegung des Steuerkolbens 76 bis zur neutralen Lage eingeleitet wird.

Bei abnehmender Last, d. h. einer Verschiebung des Steuerkolbens 76 nach links, öffnet sich der zur Belüftung dienende Querschnitt 50, so dass der Druck im Inneren der Druckkammer 68 so lange erhöht wird und die Membranfeder 72 stärker entlastet wird, bis die Sollposition wieder erreicht ist. Über die Kanäle 50 und 52 kann eine Druckabsenkung, eine Druckerhöhung sowie eine Beibehaltung des Druckniveaus in der Druckkammer 68 des elektropneumatischen Stellers 10 erreicht werden. Während die zweite Öffnung 52 der Entlüftung, d. h. einer Druckabsenkung in der Druckkammer 68, dient, dient der vom Steuerschieber 48 überdeckte, über den Freistich 49 mit dem zweiten Kanal 52 verbindbare erste Kanal 50 sowohl der Be- als auch der Entlüftung. Wird der Steuerkolben 76 bei zunehmender auf den Kugelkopf 74 wirkender Last nach rechts verschoben, so entsteht über den Freistich 49 an der Innenseite des Steuerschiebers 48 eine Verbindung zwischen dem ersten Kanal 50 und dem zweiten Kanal 52.

Gegenüber einem Umschaltventil, z. B. einem Magnetventil, zeichnet sich der beschriebene elektropneumatische Steller 10 gemäß der in Figuren 1 und 2 dargestellten Ausführungen durch einen erheblich reduzierten Luftverbrauch aus. Die Reduzierung des Luftverbrauches wird erreicht, in dem die Querschnitte 50, 52 zur Be- und Entlüftung gleichzeitig geschlossen werden können, so dass der aktuell eingestellte Dosendruck und die Position entweder der zweiteilig ausgeführten Membranstange 16 oder des einteilig ausgebildeten Steuerkolbens 76 beibehalten werden können. Die in Figur 1 dargestellte beispielhafte Ausführung des pneumatischen Stellers zeichnet sich durch eine hervorragende Dichtigkeit an den Ventilen 54 beziehungsweise 56 und einen minimalen Luftverbrauch aus. Bei der in Figur 2 dargestellten Ausführung ergeben sich minimale Spaltverluste. In den beiden im Zusammenhang mit Figur 1 und Figur 2 beschriebenen Ausführungen eines elektropneumatischen Stellers 10 kann sich durch Optimieren der Öffnungsgeometrie, d. h. durch Optimierung der Kanäle 50, 52 im Ausführungsbeispiel gemäß Figur 1 beziehungsweise in der Konfiguration der Öffnungen 50, 52 in der Mantelfläche des einteilig ausgebildeten Steuerkolbens, das Regelverhalten optimieren lassen. So kann der Querschnittsverlauf der Kanäle 50, 52 beziehungsweise der Öffnungen 50, 52 über den Öffnungshub der Ventile 54, 56 progressiv ausgeführt werden, so dass im Bereich kleiner Soll/Ist-Abweichungen schwach korrigiert und im Bereich großer Abweichungen eine starke Korrektur erzielt werden kann. Damit kann einerseits bei großen Abweichungen schnell reagiert werden, ohne dass sich im Bereich kleiner Abweichungen Instabilitäten, wie z. B. ein Schwingen des Steuerschiebers 48 um seine Solllage, einstellen.

Eine Wegesensorik zur Diagnose und Überwachung der Position des Steuerschiebers 48 wird bevorzugt durch eine Induktivitätsmessung der Spule 60 erreicht. Dazu bietet sich das Tauchankerprinzip an. Eine Bewegung des z. B. aus einem ferromagnetischen Material ausbildbaren Steuerschiebers 48 bewirkt eine Variation der Spuleninduktivität der Spule 60, die wiederum als Messgröße für die aktuelle Stellposition des Regelschiebers, d. h. entweder der zweiteilig ausgebildeten Membranstange 16 oder im Falle des Ausführungsbeispiels gemäß Figur 2 des einteilig ausgebildeten Steuerkolbens 76, erfasst werden kann.

Der Darstellung gemäß Figur 3 ist in schematischer Übersicht eine Einbausituation des vorstehend in Zusammenhang mit den Figuren 1 und 2 beschriebenen pneumatischen Stellers zu entnehmen.

Der Darstellung gemäß Figur 3 ist entnehmbar, dass einer Verbrennungskraftmaschine 90 Frischluft über ein Saugrohr 92 zugeführt wird. Der Verbrennungskraftmaschine 90 ist eine Aufladeeinrichtung 94 zugeordnet, die ein im Saugrohr 92 angeordnetes Verdichterteil und einen einem Abgaskrümmer 106 nachgeschalteten Turbinenteil aufweist. Der Verbrennungskraftmaschine ist einlassseitig eine Drosseleinrichtung 96 vorgeschaltet. Der Drosseleinrichtung 96 wiederum sind die Einlassventile 98 nachgeordnet, über welche die angesaugte und vorverdichtete Frischluft in Brennräume 102 der Verbrennungskraftmaschine 90 eintritt. Abgas verlässt die Brennräume 102 der Verbrennungskraftmaschine 90 über geöffnete Auslassventile 100. Die Brennräume 102 sind jeweils durch Kolben 104 begrenzt; das verbrannte Abgas wird im Ausschiebetakt aus den Brennräumen 102 in den Abgaskrümmer 106 geschoben, innerhalb dessen sich der Verdichterteil der als Turbolader ausgebildeten Aufladeeinrichtung 94 befindet. Dem Turbinenteil der bevorzugt als Turbolader ausgebildeten Aufladeeinrichtung 94 ist ein Wastegate 108 zugeordnet. Mittels des Wastegates 108 kann ein Teilstrom des Abgases um den Turbinenteil der Aufladeeinrichtung 54 geführt werden. Das Wastegate 108 wird über einen Wastegatesteller 110 betätigt, der wiederum über den elektropneumatischen Steller 10, wie vorstehend in Zusammenhang mit den Figuren 1 und 2 beschrieben, angesteuert wird. Der Vollständigkeit halber sei erwähnt, dass dem Turbinenteil der Aufladeeinrichtung 94 im Abgastrakt der Verbrennungskraftmaschine 90 mindestens ein Abgaskatalysator 112 nachgeschaltet ist.

Der erfindungsgemäß vorgeschlagene elektropneumatische Steller 10 kann für die Realisierung von stetigen Stellaufgaben, die an Aggregaten einer Verbrennungskraftmaschine erforderlich werden, eingesetzt werden, so z. B. für Abgasrückführventile oder variable Saugrohrverstellung. Im vorliegenden Ausführungsbeispiel ist der elektropneumatische Steller 10 des Wastegates 108 gemäß der Darstellung in Figur 3 beispielhaft erläutert.

## Patentansprüche

1. Elektropneumatischer Steller (10) zur Betätigung von Aggregaten (94) einer Verbrennungskraftmaschine (90), wobei der elektropneumatische Steller (10) ein Gehäuse (12) umfasst, in dem ein mit einer Membran (44) verbundenes Stellglied (76) beweglich aufgenommen ist, wobei die Membran (44) in dem Gehäuse (12) eine Druckkammer (68) vom übrigen Innenraum des Gehäuses (12) trennt und in der Druckkammer (68) ein geringerer Druck (pu) als Atmosphärendruck (PatIn) einstellbar ist, wobei an dem Stellglied (76) ein Steuerschieber (48) angeordnet ist, der abhängig von der Relativposition des Stellgliedes (76) in dem Gehäuse die Druckkammer (68) des Gehäuses (12) belüftet, entlüftet oder verschließt, und wobei das Stellglied hohl ausgeführt ist und einen Belüftungskanal (24) und einen Entlüftungskanal (26), die jeweils mit der Druckkammer (68) verbindbar sind, umfasst und der Steuerschieber (48) hülsenförmig ausgeführt ist, **dadurch gekennzeichnet, dass** der hülsenförmige Steuerschieber (48) am Umfang des Stellgliedes (76), Kanäle (50, 52) überdeckend, axial verschiebbar ist.

2. Elektropneumatischer Steller (10) gemäß Anspruch 1, **dadurch gekennzeichnet, dass** der Steuerschieber (48) über eine sich an einem Anschlag (80) des Stellgliedes (76) abstützende Feder (78) vorgespannt ist.

3. Elektropneumatischer Steller (10) gemäß Anspruch 2, **dadurch gekennzeichnet, dass** der Steuerschieber (48) von einer Magnetspule (60) umschlossen ist, die, abhängig vom Tastverhältnis eines an dieser anliegenden PWM-Signals, eine der Kraft der Feder (78) entgegenwirkende Kraft erzeugt.

4. Elektropneumatischer Steller (10) gemäß Anspruch 1, **dadurch gekennzeichnet, dass** das Stellglied (76) als hohler Steuerkolben ausgeführt ist, der über einen Stopfen (82) in den Belüftungskanal (24) und den Entlüftungskanal (26) geteilt ist, der über eine Öffnung (40) im Gehäuse (12) mit einem von einer Unterdruckquelle bereitgestellten Druckniveau Pu beaufschlagt ist.

5. Elektropneumatischer Steller (10) gemäß Anspruch 1, **dadurch gekennzeichnet, dass** das Stellglied (16, 76) durch einen Membranteller (42) und einen Stutzen im Gehäuse (12) oder über im Gehäuse (12) angeordnete Lagerbuchsen (86, 11) geführt ist.

6. Verwendung des elektropneumatischen Stellers (10) gemäß einem oder mehrerer der Ansprüche 1 bis 5 zur Betätigung eines Wastegatestellers (110) einer Aufladeeinrichtung (94) für eine Verbrennungskraftmaschine (90).

## Claims

1. Electropneumatic actuator (10) for activating assemblies (94) of an internal combustion engine (90), wherein the electropneumatic actuator (10) comprises a housing (12) in which an actuating element (76) which is connected to a diaphragm (44) is movably accommodated, wherein the diaphragm (44) in the housing (12) divides off a pressure chamber (68) from the rest of the interior of the housing (12), and a lower pressure (pu) than atmospheric pressure (PatIn) can be set in the pressure chamber (68), wherein a control slide (48), which ventilates, vents or closes off the pressure chamber (68) of the housing (12) as a function of the relative position of the actuating element (76) in the housing, is arranged on the actuating element (76), and wherein the actuating element is of hollow design and comprises a ventilating duct (24) and a venting duct (26) which can each be connected to the pressure chamber (68), and the control slide (48) is embodied in the form of a sleeve, **characterized in that** the control slide (48) in the form of a sleeve can be displaced axially on the circumference of the actuating element (76) so as to cover ducts (50, 52).

2. Electropneumatic actuator (10) according to Claim 1, **characterized in that** the control slide (48) is prestressed by means of a spring (78) which is supported on a stop (80) of the actuating element (76).

3. Electropneumatic actuator (10) according to Claim 2, **characterized in that** the control slide (48) is enclosed by a solenoid (60) which generates, as a function of the pulse duty factor of a PWM signal applied thereto, a force which counteracts the force of the spring (78).

4. Electropneumatic actuator (10) according to Claim 1, **characterized in that** the actuating element (76) is embodied as a hollow control piston which is divided by means of a stopper (82) into the ventilating duct (24) and the venting duct (26), to which a pressure level Pu, made available by an underpressure source, is applied via an opening (40) in the housing (12).

5. Electropneumatic actuator (10) according to Claim 1, **characterized in that** the actuating element (16, 76) is guided through a diaphragm disc (42) and a connecting element in the housing (12) or via bearing bushings (86, 11) arranged in the housing (12).

6. Use of the electropneumatic actuator (10) according to one or more of Claims 1 to 5 for activating a waste gate actuator (110) of a supercharging device (94) for an internal combustion engine (90).

## Revendications

1. Régulateur électropneumatique (10) pour l'actionnement de groupes (94) d'un moteur à combustion interne (90), le régulateur électropneumatique (10) comprenant un boîtier (12) dans lequel un actionneur (76) connecté à une membrane (44) est reçu de manière mobile, la membrane (44) dans le boîtier (12) séparant une chambre de pression (68) du reste de l'espace interne du boîtier (12) et une pression (pu) inférieure à la pression atmosphérique (PatIn) pouvant être ajustée dans la chambre de pression (68), un tiroir de commande (48) étant disposé au niveau de l'actionneur (76), lequel, en fonction de la position relative de l'actionneur (76) dans le boîtier, aère, désaère ou ferme la chambre de pression (68) du boîtier (12), et l'actionneur étant réalisé sous forme creuse et comprenant un canal d'aération (24) et un canal de désaération (26) qui peuvent être chacun connectés à la chambre de pression (68) et le tiroir de commande (48) étant réalisé sous forme de douille, **caractérisé en ce que** le tiroir de commande sous forme de douille (48) peut être déplacé axialement au niveau de la périphérie de l'actionneur (76) en recouvrant des canaux (50, 52).

2. Régulateur électropneumatique (10) selon la revendication 1, **caractérisé en ce que** le tiroir de commande (48) est précontraint par le biais d'un ressort (78) s'appuyant sur une butée (80) de l'actionneur (76).

3. Régulateur électropneumatique (10) selon la revendication 2, **caractérisé en ce que** le tiroir de commande (48) est entouré par une bobine magnétique (60) qui, en fonction du rapport cyclique d'un signal PWM appliqué à celle-ci, génère une force opposée à la force du ressort (78).

4. Régulateur électropneumatique (10) selon la revendication 1, **caractérisé en ce que** l'actionneur (76) est réalisée sous forme de piston de commande creux qui est divisé par un bouchon (82) en le canal d'aération (24) et le canal de désaération (26), qui est sollicité par le biais d'une ouverture (40) dans le boîtier (12) avec un niveau de pression Pu fourni par une source de dépression.

5. Régulateur électropneumatique (10) selon la revendication 1, **caractérisé en ce que** l'actionneur (16, 76) est guidé par un plateau de membrane (42) et une tubulure dans le boîtier (12) ou par le biais de douilles de palier (86, 11) disposées dans le boîtier (12).

6. Utilisation du régulateur électropneumatique (10) selon l'une quelconque ou plusieurs des revendications 1 à 5, pour l'actionnement d'un régulateur de clapet de pression de suralimentation (110) d'un dispositif de suralimentation (94) pour un moteur à combustion interne (90).
